# EUROPEAN PATENT SPECIFICATION

(11) **EP 1 211 927 B1**
(45) Date of publication and mention of the grant of the patent: **07.07.2004**
(21) Application number: 00960668.2
(22) Date of filing: 15.09.2000
(51) Int. Cl.: A01J 5/007

(54) **AN ARRANGEMENT FOR AUTOMATICALLY MILKING ANIMALS**
VORRICHTUNG ZUM AUTOMATISCHEN MELKEN VON TIEREN
DISPOSITIF DE TRAITE AUTOMATIQUE D'ANIMAUX

(30) Priority: 15.09.1999 SE 9903286
(43) Date of publication of application: 12.06.2002
(73) Proprietor: DeLaval Holding AB, 147 21 Tumba (SE)
(72) Inventor: BOSMA, Epke, S-147 34 Tumba (SE)
(74) Representative: Gray, Helen Mary
(86) International application number: PCT/EP2000/009029
(87) International publication number: WO 2001/019169

(56) References cited:
- EP-A- 0 679 331
- DE-A- 4 113 699
- US-A- 4 011 838
- US-A- 5 054 425

## Description

### Field of invention

The present invention is directed to an arrangement and a method for milking animals. The invention relates particularly to the control of the vacuum and pulsation applied to the teats of an animal so as to prevent injury to the teats and obtain a maximum milking yield.

### Background art

It is known to vary the vacuum and pulsation rate and pulsation ratio applied to the teats of an animal as a function of the milk flow rate during milking. This principal is described in SE 326 064 and BE 99814 and is also generally known from the Duovac™ system available from Alfa Laval Agri AB. During a first milking phase when milk flow is being stimulated, a low vacuum level and low pulsation rate with high massage ratio is applied to the teats through the teat cup cluster. As soon as an increased milk flow is detected upstream of the cluster, which indicates that milk ejection has occurred, the vacuum is increased to speed the collection of milk. When the milk flow falls again at the end of milking, the system switches back to a lower vacuum to prevent injury to the teats and perform further stimulation which it is believed will increase future yield.

EP 0 679 331 describes a milking arrangement, whereby the pulsating vacuum applied to each teat cup may be varied individually to improve yield. Milk flow sensors attached to each milk tube are provided for this purpose. However, the working vacuum applied to the milk lines is held constant throughout milking.

While this system is generally very satisfactory in most cases, it does not take account of the variation in behaviour of the different udder quarters in terms of milk production. For example, it is well known that the rear udder quarters of a cow generally produce more milk than the front udder quarters. This is conventionally dealt with by attaching the rear teat cups before the front teat cups and commencing milking immediately on attachment. However, even this measure is rarely sufficient to synchronise the milk production of all teats.

The result is either the application of a lower vacuum to udder quarters which still have a high milk flow, thus unnecessarily extending the milking process, or alternatively the application of the higher vacuum to teats that have effectively finished producing milk, i.e. over-milking, which can lead to teat damage in the form of lesions and ultimately infections, and also influence the milking yield.

There is thus a need to improve the known milking systems in order to prevent damage to the teats and over-milking of the animal, while effecting the milking in as rapid and efficient a manner as possible.

### SUMMARY OF INVENTION

This object is achieved in an arrangement for milking animals, including teat cups for attachment to the teats of an animal, a conduit coupled to each teat cup for transporting milk away from said teat cups under application of a vacuum, means for sensing the rate of flow of milk from said teat cups and vacuum regulating means for varying the vacuum applied to the teat cups through the conduits. Moreover, the flow rate sensing means are coupled to all conduits and disposed to measure the rate of flow of milk from each teat cup individually and the regulating means are similarly coupled to each conduit and arranged to regulate the vacuum applied to each teat cup individually. The arrangement further includes control means coupled to both the sensing means and regulating means for controlling the regulating means to increase the vacuum applied to any one teat cup from a first vacuum level to at least a second vacuum level in response to an increase in sensed flow rate from said one teat cup.

By controlling the initial vacuum applied to each teat cup individually and linking this control with the rate of flow of milk produced by each teat, the arrangement prevents injury to the teats during milking, while simultaneously ensuring that maximum milk yield is achieved. In a preferred arrangement the regulating means are further controlled to reduce the vacuum applied to each teat cup to at least a third vacuum level in response to a decrease in sensed flow rate from said teat cup. This further ensures that the milking process is optimally adapted to the individual milk production of each udder quarter and that over milking is avoided.

In a preferred embodiment of the invention the control means control the regulating means to increase the vacuum applied to all teat cups in response to an increase in sensed flow rate from one teat cup. Milk ejection, i.e. the release of milk from the alveoli into the udder cistern, teat cisterns and big milk ducts, can occur following the stimulation of one teat only. Thus once the milk ejection is determined by measuring the increased flow rate for one teat, it can be assumed that all udder quarters will start to produce milk in sufficient quantities for full milking to commence. By applying the higher vacuum to all teats when increased flow is detected only for one teat, valuable time can be saved at the beginning of the milking process, which will speed the milking as a whole.

The invention further resides in a method of operating a milking arrangement having teat cups for attachment to the teats of an animal, vacuum regulating means for varying the vacuum applied to each teat cup and milk flow monitoring means for sensing the flow of milk produced by each teat. The method includes the following steps: for each teat, attaching a teat cup to a teat of an animal and applying a first vacuum level to said teat cup, increasing the vacuum applied to said teat cup to at least a second vacuum level when said milk flow rate reaches a first threshold level.

In a preferred embodiment of the invention the method includes: for each teat, decreasing the vacuum applied to the teat cup to a third level when the milk flow rate falls to a second threshold level and cutting off the vacuum after a predetermined time.

The method is speeded up considerably when the second vacuum level is applied to all teat cups when the milk flow rate from one teat reaches the first threshold level.

### BRIEF DESCRIPTION OF THE DRAWINGS

Further objects and advantages of the present invention will become apparent from the following description of the preferred embodiments that are given by way of example with reference to the accompanying drawings. In the drawings:
- Fig. 1: depicts a block diagram representing a milking arrangement according to the present invention, and
- Fig. 2: shows a graphical representation of the sequence of events controlling the arrangement in response to the milk flow from each teat of a cow.

### DETAILED DESCRIPTION OF THE DRAWINGS

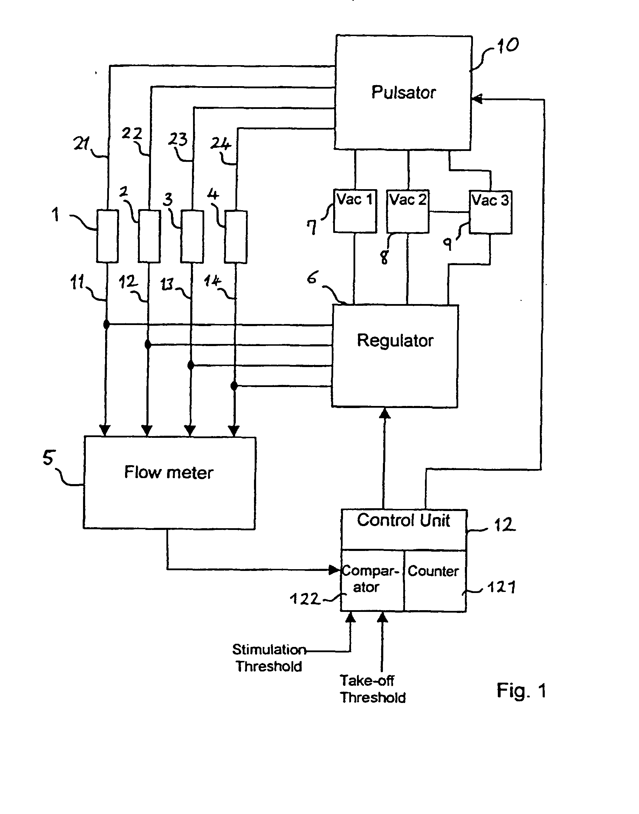

The milking arrangement depicted schematically in block diagram form in Fig. 1 includes four teat cups 1-4 for attachment to each teat of an animal. In the present embodiment it is assumed that this animal is a cow. A conduit 11-14 is attached to each teat cup for transporting milk away from the teat cups. A flow meter 5 is coupled to each of these conduits 11-14 for sensing the rate of flow of the milk through each conduit individually. This flow meter 5 may be a series of e.g. mechanical flow meters arranged in each conduit. Alternatively the flow meter may be a single unit adapted to measure the flow in all four conduits 11-14. The meter 5 may also be disposed to measure the total quantity of milk passing through each conduit, from which the rate of flow may be calculated.

Each conduit 11-14 is furthermore subjected to a vacuum which is indicated by the connection of each conduit to a regulator 6 and through this to one of a number of vacuum sources 7, 8, 9. The regulator 6 selectively connects one of the vacuum sources 7, 8, 9 to the conduits 11-14. In the illustrated embodiment, three vacuum sources 7, 8, 9 are illustrated, however, it will be understood that more, or possibly fewer, vacuum sources may be provided depending on the desired result. Moreover, a single vacuum source, which generates different vacuum levels may be utilised in place of the separate sources depicted in the figure.

A second set of conduits 21-24 are provided, each being connected to one teat cup 1-4. These second conduits 21-24 are connected to a pulsator unit 10, which is also connected to the vacuum sources 7, 8, 9. The pulsator unit 10 is arranged to apply an alternating vacuum with varying pulsation rate and pulsation ratio to each teat cup individually.

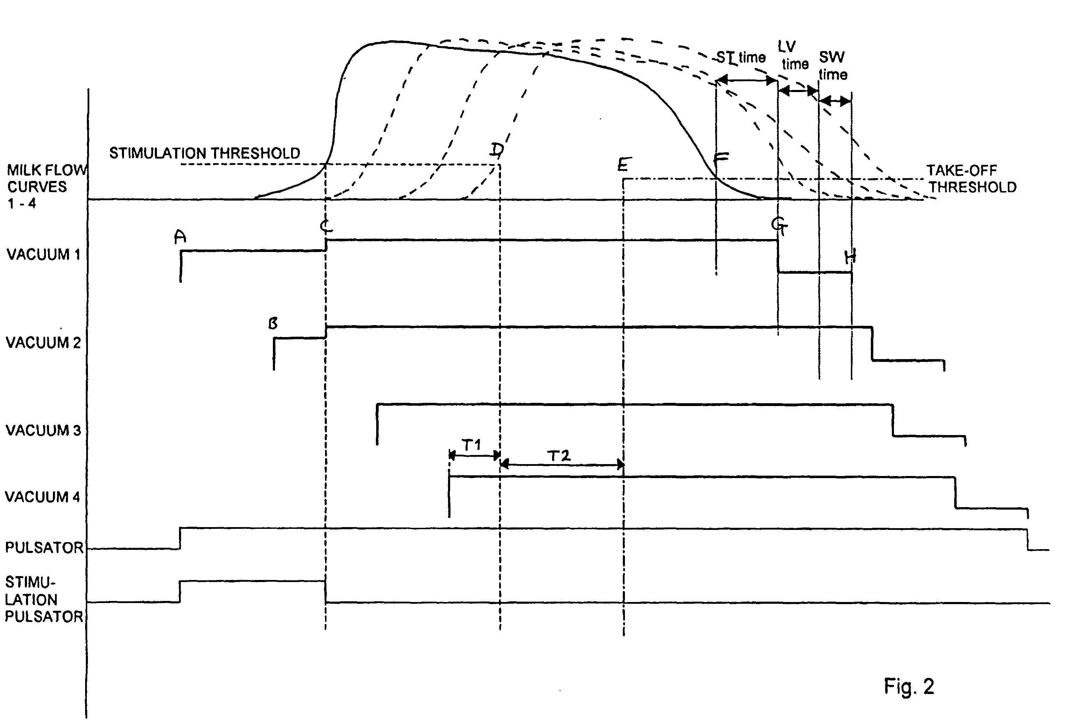

A control unit 12 is connected to the flow meter 5, the vacuum regulator 6 and pulsator unit 10. The control unit 12 preferably includes some form of data processing circuitry, such as a microprocessor with associated memory, however, it may be implemented entirely in hardware. It includes a timing capability, preferably in the form of a counter 121, as well as a comparator function 122. This control unit 12 receives the sensed flow rates for each conduit 11-14 from the flow meter 5, and determines from these whether the applied vacuum should be increased or decreased or left unchanged on the basis of a comparison with predetermined threshold levels, which will be discussed with reference to Fig. 2 below. The control unit 12 further determines which pulsation rate and ratio should be applied to each teat cup.

The operation of the control unit 12 is illustrated in graphical form in Fig. 2. This figure shows the milk flow from each teat cup 1-4 against time. The milk flow curve for the first teat cup 1 is shown in a continuous line, while the curves for the remaining teat cups 2-4 are indicated by dashed lines. The graph also shows the application of different vacuum levels and a pulsation vacuum to each teat cup 1-4. The various timing sequences are illustrated for the first applied teat cup 1 only, however, the milk flow curves for the remaining teat cups and the vacuums applied to these teat cups are indicated in Fig. 2.

Starting on the left of Fig. 2, teat cup 1 is attached to the first teat prior to point A. A first vacuum level is then applied to the teat cup at step A. At the same time a pulsating vacuum is applied to the cavity between the liner and shell (not shown) of the teat cup to stimulate milk ejection. Preferred values for this first phase are a vacuum level of 35 kPa, a pulsation rate of 50 and a pulsation ratio of 30/70, that is 70% massage with the liner closed and 30% milking. Also from time A, a first threshold level, which will be referred to as the stimulation threshold level, is monitored by the control unit 12 i.e. compared with the sensed milk flow using the comparator 122,. The second teat cup 2 is then attached to a teat sometime between times A and B. At point B the same vacuum, that is the stimulation vacuum, is applied to this teat cup 2 also. Soon after this, the milk flow from the first teat cup reaches and passes the stimulation threshold level as indicated by the dashed line at C. The regulator 6 is then controlled by the control unit 12 to switch through a higher vacuum to the teat cups 1-4. This higher vacuum, preferably at a level of 45 kPa is selected to efficiently extract the milk from the udder quarters. At the same time, the stimulation pulsation is stopped thereby changing the pulsation to a milking pulsation which has a higher ratio of milking to massage compared to the stimulating pulsation. The third and fourth teat cups are applied in turn, but since the stimulation threshold has been reached for at least one teat, the full vacuum is applied to each teat immediately on application of a vacuum.

As can be seen from Fig. 2 the stimulation threshold is continuously monitored until time D is reached. At this point, if the stimulation threshold has not been reached by the milk flow from any of the teats, the vacuum is switched to full milking vacuum for at least a predetermined time period until time point E is reached. Time D is set at a predetermined time period T 1 after application of the fourth and last teat cup, illustrated by the point in time when a vacuum is applied to this teat cup 4. This is a final attempt to trigger milk ejection. This period of high vacuum, during which the vacuum level will not change is maintained for a second predetermined time period denoted by T2 which terminates at point E. At this point E, a second milk flow threshold level, hereinafter called the take-off threshold, is monitored by the control unit 12. The take-off threshold is lower than the stimulation threshold. If the milk flow from any of the teats falls below this threshold, a take-off sequence will be started for that teat cup.

For the first teat cup 1 the milk flow falls below the take-off threshold at point F. This starts a counter or timer 121 in the control unit 12 which measures a predetermined time period called the strip time ST. This is provided to ensure that as much as possible of the remaining milk, the so-called strippings, which is left in the large cavities of the udder (udder cistern, teat cistern and big milk ducts), is removed. If, during this period ST, the milk flow rises above the take-off threshold, the control unit 12 will cancel the ST period timer or counter 121 and switch back to the main milking sequence. The ST period is restarted only when the milk flow again falls below the take-off threshold. After elapse of the time period ST, the vacuum applied to the teat cup through conduit 11 is reduced to a lower level, preferably between about 15 to 25 kPa at point G. This lower vacuum is selected to enable all milk in the teat cup to be drawn into a collecting tank and also, in combination with the pulsation vacuum to provide further massage to the teat. This lower vacuum level is held through two further time periods, namely a low vacuum period LV which enables the vacuum in the conduit to fall to the desired level, and a sweep period SW, for ensuring that all remaining milk is swept into the collecting tank. On elapse of this last period SW at point H, the vacuum and pulsation is shut off, after which the teat cup 1 can be removed from the teat. The take-off sequence for the remaining four teat cups is identical as can be seen from the figure. While the pulsation is the same from point C onwards, i.e. after the milk flow rate of one teat has crossed the stimulation threshold, it will be understood that the pulsation rate and/or ratio could be changed once again during application of the low vacuum (at point G for teat cup 1) for each teat cup.

While in Fig. 2 only three vacuum levels have been illustrated, it will be understood that this does not exclude the use of further vacuum levels. This may be useful particularly at the beginning or end of the milking sequence to improve stimulation and reduce stress to the teats.

It is important to note that while the switch from a lower stimulating vacuum to a full milking vacuum at the beginning of the milking process may be performed for all udder quarters, this is not the case at the end of milking. The stimulation of milk ejection is effective for all udder quarters, however each udder quarter will generally produce different amounts of milk with corresponding differences in milking duration. Thus the take-off threshold is monitored for each udder quarter, and the subsequent teat cup removal follows after vacuum shut-off which in turn occurs after the sum of the time periods ST, LV and SW which are triggered when the milk flow falls below the take-off threshold.

## Claims

1. An arrangement for milking animals, including teat cups (1-4) for attachment to the teats of an animal, a conduit (11-14) coupled to each teat cup for transporting milk away from said teat cups under application of a vacuum, means for sensing the rate of flow of milk from said teat cups and vacuum regulating means (6) for varying the vacuum applied to said teat cups through said conduits, wherein said sensing means (5) are coupled to all conduits and disposed to measure the rate of flow of milk from each teat cup separately **characterised in that** said regulating means (6) are coupled to each conduit and arranged to regulate the vacuum applied to each teat cup separately, the arrangement further including control means (12) coupled to both said sensing means and said regulating means for controlling the regulating means to increase the vacuum applied to any one teat cup from a first vacuum level to at least a second vacuum level in response to an increase in sensed flow rate from said one teat cup.

2. An arrangement as claimed in claim 1, **characterised in that** said control means (12) are further arranged to control said regulating means (6) to increase the vacuum applied to all teat cups (1-4) from a first vacuum level to a second vacuum level in response to an increase in sensed flow rate from one teat cup.

3. An arrangement as claimed in claim 1 or 2, **characterised in that** said control means (12) are arranged to control said regulating means (6) to reduce the vacuum applied to any one teat cup to a third vacuum level in response to a decrease in sensed flow rate from said teat cup.

4. An arrangement as claimed in any one of claims 1 to 3, further **characterised by** second conduits (21-24) coupled to each teat cup and pulsator means (10) coupled to each second conduit for applying an alternating vacuum at a predetermined pulsation rate to each teat cup individually, wherein said control means (12) are coupled to said pulsator means for controlling the application of a pulsation vacuum to a teat cup in response to a change in sensed flow rate from said teat cup.

5. An arrangement as claimed in any previous claim, **characterised in that** said control means (12) include comparator means (122) for comparing the sensed flow with at least one predetermined threshold level.

6. An arrangement as claimed in any previous claim, **characterised in that** said control means (12) include timer means (121) for timing at least one predetermined time period.

7. A method of operating a milking arrangement having teat cups (1-4) for attachment to the teats of an animal, milk conduits connected to said teat cups, vacuum regulating means (6) for varying a vacuum applied to the teat cups through said milk conduits (11-14) and milk flow monitoring means (5) for sensing the flow of milk produced by each teat, the method being **characterised by** the following steps:
for each teat, attaching a teat cup to a teat of an animal and applying a first vacuum level to said teat cup through said milk conduits,
increasing the vacuum applied to said teat cup to a second vacuum level when said milk flow rate from said teat reaches a first threshold level.

8. A method as claimed in claim 7, further **characterised by**
for each teat cup, decreasing the vacuum applied to said teat cup to a third level when said milk flow rate falls to a second threshold level,
and
cutting off said vacuum a predetermined time period (ST, LV, SW) after decreasing said vacuum.

9. method as claimed in claim 7 or 8, **characterised by** applying said second vacuum level to all teat cups (1-4) when the milk flow rate from one teat reaches said first threshold level.

10. A method as claimed in any one of claims 7 to 9, **characterised in that** said first threshold level is above said second threshold level.

11. A method as claimed in any one of claims 7 to 10, **characterised in that** said first vacuum level is higher than said third vacuum level.

12. A method as claimed in any one of claims 7 to 11, **characterised by** the steps of:
for all teat cups (1-4), increasing said vacuum from said first vacuum level to said second vacuum level when, after a first predetermined time period (T1) after application of the last teat cup, the rate of flow from all teats is below said first threshold level.

13. A method as claimed in claim 12, **characterised by** commencing monitoring the milk flow from all teats to determine whether the second threshold level has been reached at the termination of a second predetermined time period (T2) following termination of said first predetermined time period (T1).

14. A method as claimed in any one of claims 7 to 13, **characterised by** decreasing the vacuum applied to said teat cup to a third level after elapse of a predetermined time period (ST) following the fall of said milk flow rate below said second threshold level.

15. A method as claimed in any one of claims 7 to 14, **characterised by** applying predetermined pulsation rates and ratios to each teat cup in association with said first, second and third vacuum levels.

## Patentansprüche

1. Vorrichtung zum Melken von Tieren, umfassend Zitzenbecher (1 - 4) zum Ansetzen an die Zitzen eines Tieres sowie eine Leitung (11 - 14), die mit jedem Zitzenbecher verbunden ist, um die Milch von den Zitzenbechern unter Anwendung eines Vakuums abzutransportieren, eine Einrichtung zum Erfassen der Milchflussrate von den Zitzenbechern und eine Einrichtung zum Regulieren des Vakuums (6), um das durch die Leitungen an die Zitzenbecher angelegte Vakuum zu variiern, wobei die Einrichtung zum Erfassen (5) mit allen Leitungen verbunden und so angeordnet ist, daß die Milchflussrate von jedem Zitzenbecher gesondert gemessen werden kann, **dadurch gekennzeichnet, daß** die Einrichtung zum Regulieren (6) mit jeder Leitung verbunden und so angeordnet ist, daß das an jedem Zitzenbecher angelegte Vakuum gesondert reguliert werden kann, wobei die Vorrichtung weiterhin eine Steuereinrichtung (12) umfasst, die sowohl an die Einrichtung zum Erfassen als auch an die Einrichtung zum Regulieren gekoppelt ist, um die Einrichtung zum Regulieren so zu steuern, daß das Vakuum, das an irgendeinen Zitzenbecher angelegt ist, in Reaktion auf einen Anstieg der erfassten Flussrate von diesem Zitzenbecher von einem ersten Vakuumpegel auf einen zweiten Vakuumpegel angehoben wird.

2. Vorrichtung nach Anspruch 1, **dadurch gekennzeichnet, daß** die Steuereinrichtung (12) weiterhin dazu dient, die Einrichtung zum Regulieren (6) so zu steuern, daß das Vakuum, das an alle Zitzenbecher (1 - 4) angelegt wird, in Reaktion auf einen Anstieg der erfassten Flussrate von einem Zitzenbecher von einem ersten Vakuumpegel auf einen zweiten Vakuumpegel angehoben wird.

3. Vorrichtung nach Anspruch 1 oder 2, **dadurch gekennzeichnet, daß** die Steuereinrichtung (12) dazu dient, die Einrichtung zum Regulieren (6) so zu steuern, daß das Vakuum, das an einen der Zitzenbecher angelegt wird, in Reaktion auf eine Abnahme der erfassten Flussrate von diesem Zitzenbecher auf einen dritten Vakuumpegel abgesenkt wird.

4. Vorrichtung nach einem der Ansprüche 1 bis 3, weiterhin **gekennzeichnet durch** zweite Leitungen (21 - 24), die mit jedem Zitzenbecher verbunden sind, und Pulseinrichtungen (10), die mit jeder zweiten Leitung verbunden sind, zum Anlegen eines wechselnden Vakuums bei einer vorbestimmten Pulsrate individuell an jeden Zitzenbecher, wobei die Steuereinrichtung (12) mit der Pulseinrichtung verbunden ist, um das Anlegen eines pulsierenden Vakuums an einen Zitzenbecher in Reaktion auf eine Änderung in der erfassten Flussrate von diesem Zitzenbecher zu steuern.

5. Vorrichtung nach einem der vorangegangenen Ansprüche, **dadurch gekennzeichnet, daß** die Steuereinrichtung (12) eine Komparatoreinrichtung (122) umfasst, um den erfassten Fluss mit mindestens einem vorbestimmten Schwellenwert zu vergleichen.

6. Vorrichtung nach einem der vorangegangenen Ansprüche, **dadurch gekennzeichnet, daß** die Steuereinrichtung (12) eine Zeitschalteinrichtung (121) zum Takten mindestens einer vorbestimmten Zeitperiode umfasst.

7. Verfahren zum Betreiben einer Melkvorrichtung mit Zitzenbechern (1 - 4) zum Ansetzen an die Zitzen eines Tieres sowie Milchleitungen, die mit den Zitzenbechern verbunden sind, einer Einrichtung zum Regulieren des Vakuums (6) zum Variieren eines Vakuums, das an die Zitzenbecher durch die Milchleitungen (11 - 14) angelegt wird, und einer Einrichtung zum Überwachen des Milchflusses (5), um den von jeder Zitze produzierten Milchfluss zu erfassen, wobei das Verfahren durch die folgenden Schritte **gekennzeichnet** ist:
Ansetzen eines Zitzenbechers an die Zitze eines Tieres für jede Zitze und Anlegen eines ersten Vakuumpegels an den Zitzenbecher durch die Milchleitungen, Anheben des an den Zitzenbecher angelegten Vakuums auf einen zweiten Vakuumpegel, wenn die Milchflussrate von dieser Zitze einen ersten Schwellenwert erreicht.

8. Verfahren nach Anspruch 7, weiterhin **dadurch gekennzeichnet, daß** für jede Zitze das an den Zitzenbecher angelegte Vakuum auf einen dritten Pegel abgesenkt wird, wenn die Milchflussrate unter einen zweiten Schwellenwert absinkt, und Abschalten des Vakuums für eine vorbestimmte Zeitdauer (ST, LV, SW), nachdem das Vakuum abgesenkt wurde.

9. Verfahren nach Anspruch 7 oder 8, **gekennzeichnet durch** das Anlegen des zweiten Vakuumpegels an alle Zitzenbecher (1 - 4), wenn die Milchflussrate aus einer Zitze den ersten Schwellenwert erreicht.

10. Verfahren nach einem der Ansprüche 7 bis 9, **dadurch gekennzeichnet, daß** der erste Schwellenwert oberhalb des zweiten Schwellenwertes liegt.

11. Verfahren nach einem der Ansprüche 7 bis 10, **dadurch gekennzeichnet, daß** der erste Vakuumpegel größer ist als der dritte Vakuumpegel.

12. Verfahren nach einem der Ansprüche 7 bis 11, **gekennzeichnet durch** die Schritte:
Anheben des Vakuums vom ersten Vakuumpegel auf den zweiten Vakuumpegel für alle Zitzen, wenn nach einer ersten vorbestimmten Zeitdauer (T1) nach dem Ansetzen des ersten Zitzenbechers die Flussrate von allen Zitzen unterhalb des ersten Schwellenwertes liegt.

13. Verfahren nach Anspruch 12, **gekennzeichnet durch** das Aufnehmen einer Überwachung des Milchflusses von allen Zitzen, um zu bestimmen, ob der zweite Schwellenwert bei der Beendigung einer zweiten vorbestimmten Zeitdauer (T2) nach der Beendigung der ersten vorbestimmten Zeitdauer (T1) erreichet worden ist.

14. Verfahren nach einem der Ansprüche 7 bis 13, **gekennzeichnet durch** ein Absenken des an den Zitzenbecher angelegten Vakuums auf einen dritten Pegel nach Ablauf einer vorbestimmten Zeitdauer (ST), nachdem die Milchflussrate unter den zweiten Schwellenwert gesunken ist.

15. Verfahren nach einem der Ansprüche 7 bis 14, **gekennzeichnet durch** ein Anlegen vorbestimmter Pulsraten und -verhältnisse an jeden Zitzenbecher in Verbindung mit den ersten, zweiten und dritten Vakuumpegeln.

## Revendications

1. Dispositif pour traire des animaux, comprenant des gobelets-trayeurs (1-4) pour fixation aux trayons d'un animal, un conduit (11-14) raccordé à chaque gobelet-trayeur pour évacuer le lait desdits gobelets-trayeurs par application d'un vide, des moyens pour détecter le débit d'écoulement de lait en sortie desdits gobelets-trayeurs et des moyens de régulation du vide (6) pour faire varier le vide appliqué aux dits gobelets-trayeurs via lesdits conduits, dans lequel lesdits moyens de détection (5) sont raccordés à tous les conduits et sont disposés pour mesurer le débit d'écoulement de lait depuis chacun des gobelets-trayeurs séparément, **caractérisé en ce que** lesdits moyens de régulation (6) sont raccordés à chacun des conduits et sont disposés pour réguler le vide appliqué à chacun des gobelets-trayeurs séparément, le dispositif comprenant en outre des moyens de commande (12) raccordés à la fois aux dits moyens de détection et aux dits moyens de régulation pour commander les moyens de régulation afin d'augmenter le vide appliqué à n'importe quel gobelet-trayeur le faisant passer d'un premier degré de vide à au moins un deuxième degré de vide en réponse à une augmentation du débit détecté en sortie dudit gobelet-trayeur.

2. Dispositif selon la revendication 1, **caractérisé en ce que** lesdits moyens de commande (12) sont en outre disposés pour commander lesdits moyens de régulation (6) pour augmenter le vide appliqué à tous les gobelets-trayeurs (1-4) le faisant passer d'un premier degré de vide à un deuxième degré de vide en réponse à une augmentation du débit détecté en sortie dudit gobelet-trayeur.

3. Dispositif selon la revendication 1 ou 2, **caractérisé en ce que** lesdits moyens de commande (12) sont disposés pour commander lesdits moyens de régulation (6) pour réduire le vide appliqué à n'importe lequel des gobelets-trayeurs le ramenant à un troisième degré de vide en réponse à une réduction du débit détecté en sortie dudit gobelet-trayeur.

4. Dispositif selon l'une quelconque des revendications 1, 3, **caractérisé en outre par** des seconds conduits (21-24) raccordés à chacun des gobelets-trayeurs et par des moyens de pulsation (10) raccordés à chacun des seconds conduits pour appliquer un vide en alternance selon un rythme de pulsation prédéterminé à chacun des gobelets-trayeurs individuellement, dans lequel lesdits moyens de commande (12) sont raccordés aux dits moyens de pulsation pour commander l'application d'un vide par pulsation à un gobelet-trayeur en réponse à une modification du débit détecté en sortie dudit gobelet-trayeur.

5. Dispositif selon l'une quelconque des revendications précédentes, **caractérisé en ce que** lesdits moyens de commande (12) comprennent des moyens de comparaison (122) pour comparer le débit détecté avec au moins un niveau seuil prédéterminé.

6. Dispositif selon l'une quelconque des revendications précédentes, **caractérisé en ce que** lesdits moyens de commande (12) comprennent des moyens d'horloge (121) pour chronométrer au moins un délai prédéterminé.

7. Procédé pour exploiter un dispositif de traite comportant des gobelets-trayeurs (1-4) pour fixation aux trayons d'un animal, des conduits de lait raccordés aux dits gobelets-trayeurs, des moyens de régulation du vide (6) pour faire varier un vide appliqué aux gobelets-trayeurs via lesdits conduits de lait (11-14) et des moyens de surveillance d'écoulement du lait (5) pour détecter l'écoulement du lait produit par chaque trayon, le procédé étant **caractérisé par** les étapes suivantes consistant à : pour chaque trayon, fixer un gobelet-trayeur à un trayon d'un animal et appliquer un premier degré de vide au dit gobelet-trayeur via lesdits conduits de lait, augmenter le vide appliqué au dit gobelet-trayeur en le faisant passer à un second degré de vide lorsque ledit débit détecté de lait s'écoulant de chaque trayon atteint un premier niveau seuil.

8. Procédé selon la revendication 7, **caractérisé en outre par** les étapes consistant à, pour chaque gobelet-trayeur, réduire le vide appliqué au dit gobelet-trayeur le ramenant à un troisième degré de vide lorsque ledit débit de lait tombe à un second niveau seuil, et arrêter ledit vide pendant un délai prédéterminé (LT, LV, SW) après avoir réduit ledit vide.

9. Procédé selon la revendication 7 ou 8, **caractérisé par** l'application dudit deuxième degré de vide à tous les gobelets-trayeurs (1-4) lorsque le débit du lait s'écoulant d'un trayon atteint ledit premier niveau seuil.

10. Procédé selon l'une quelconque des revendications 7 à 9, **caractérisé en ce que** ledit premier niveau seuil est supérieur audit second niveau seuil.

11. Procédé selon l'une quelconque des revendications 7 à 10, **caractérisé en ce que** ledit premier degré de vide est plus élevé que ledit troisième degré de vide.

12. Procédé selon l'une quelconque des revendications 7 à 11, **caractérisé par** les étapes consistant à : pour tous les gobelets-trayeurs (1-4), augmenter ledit vide le faisant passer dudit premier degré de vide audit deuxième degré de vide lorsque, après un premier délai prédéterminé (T1) consécutivement à la pose du dernier gobelet-trayeur, le débit d'écoulement de tous les trayons est au-dessous dudit premier niveau seuil.

13. Procédé selon la revendication 12, **caractérisé par** le lancement de la surveillance du débit du lait en sortie de tous les trayons pour déterminer si le second niveau seuil est atteint à la fin d'un second délai prédéterminé (T2) faisant suite à la fin dudit premier délai prédéterminé (T1).

14. Procédé selon l'une quelconque des revendications 7 à 13, **caractérisé par** la réduction du vide appliqué audit gobelet-trayeur le ramenant à un troisième degré après l'écoulement d'un délai prédéterminé (ST) faisant suite à la chute dudit débit de lait au-dessous dudit second niveau seuil.

15. Procédé selon l'une quelconque des revendications 7 à 14, **caractérisé par** l'application de taux et de rapports de pulsation prédéterminés à chacun des gobelets-trayeurs en association avec lesdits premier, deuxième et troisième degrés de vide.
